# EUROPEAN PATENT APPLICATION

(11) **EP 3 828 788 A1**
(43) Date of publication of application: **02.06.2021**
(21) Application number: 20162770.0
(22) Date of filing: 12.03.2020
(51) Int. Cl.: G06Q 10/02, G06Q 50/26

(54) **SYSTEM AND METHOD FOR AUTOMATED PROCESSING OF APPLICATIONS**

(30) Priority: 26.11.2019 US 201916696895
(71) Applicant: Patil, Rajeev Shant, Thane West, Maharashtra (IN)
(72) Inventor: Patil, Rajeev Shant, Thane West, Maharashtra (IN)
(74) Representative: Guardian IP Consulting I/S

(57) **Abstract**

A system for transferring user information to an institution for application purposes is provided, comprising the steps of storing a plurality of information templates corresponding to application forms, permitting access to the system by a user upon authentication, accepting a user selection of an application form, applying a template including data fields corresponding to personal information to be provided, retrieving user personal information corresponding to the data fields from a user local data storage, checking the retrieved user personal information for consistency with the data fields, populating the application form with the user personal information, providing the populated application form to the user for approval, and submitting the populated application form to the institution, wherein the personal information in the user local data storage includes multiple forms of biometric information, and wherein the user local data storage is controlled by the user.

## Description

### TECHNICAL FIELD

This application relates to a system and method for automated processing of applications.

### BACKGROUND

According to the United Nations World Tourism Organization, 63% of the world's population needs a travel visa prior to international travel. 1.4 billion travelers annually travel internationally, and that number is expected to rise to 1.8 billion by the year 2030.

A visa is a conditional authorization by a government agency for a foreign person by a country, generally associated with a permission to enter the country for a specific period of time. Traditionally, the visa application process is complicated and country specific, where every country has its own terms, conditions and procedures. Typically, the visa applicant is required to apply for a visa in advance of anticipated travel, and the applicant must to fill out an application form and attach large number of supporting documents to request the same. The application form and the supporting documents are often needed to be signed at multiple locations, and arranged in a particular manner, which makes the whole process error prone and difficult for the novice visa applicant. There are chances that the visa applicant may inadvertently overlook a question, misunderstand a complex set of instructions, or inadvertently forget to attach a specific supporting document, any of which may lead to rejection of the visa. In that case, the visa applicant must reinitiate the whole visa application process, which requires additional time, effort, and expense. Further, upon successful application, a personal interview is scheduled with the visa granting authority for verifying the submitted supporting documents, based on which the visa may be granted. This process is onerous, time-consuming, and subject to error.

According to the UN world Tourism Organization, improving the visa process could generate an additional $206 billion worldwide. This is because there is no universally-accepted standard operating procedure amongst governments and countries for the visa process, the process is cumbersome and difficult, and repeat visas are required for travel because relevant information is not stored which would help facilitate future visa application processing. Today, more than sixty countries outsource the document process, and increasingly more governments are moving to an electronic visa system in favor of a digital solution, and more than 100 countries worldwide do not collect any form of applicant biometric data prior to travel due to infrastructure limitations and cost issues. In addition, more than 60% of millennials and young travels purchase their flights on their phone or mobile device.

Therefore, there is a need to provide an automated system for processing visa application and which limits the aforementioned drawbacks.

### DESCRIPTION OF THE PRIOR ART

The closest prior art US Patent No. 10140369 for COMPUTER IMPLEMENTED SYSTEM AND METHOD FOR COLLATING AND PRESENTING MULTI-FORMAT INFORMATION, which issued November 27, 2018. While this patent generally references the visa application process, they are processes which the present invention specifically aims to improve upon, and this reference does not teach the biometric identification process or profile score system which are crucial components of the present invention.

### SUMMARY OF THE INVENTION

The present invention provides an app-based system for secured and automated transaction processing. An app, short for "mobile application", is a web-based computer program or software application designed to run on a mobile device such as a smart phone. In an alternate embodiment, it is envisioned that the present invention may be available on desktop applications to run on desktop computers through a web browser.

It is envisioned that the system of the present invention may be applicable for online transactions in industries, including but not limited to, government filings, e-commerce, electronic banking, Fintech, aviation, retail, entertainment, hospitality, advertising, food and beverage, transportation, and sporting events, whereby universal standards can be employed via the National Institute of Standards and Technology for seamless online user authentication and verification and processing of a desired transaction. The present invention system preferably has broad applicability for application or transaction processes within these various industries comprising some form of state-wide, national, or international standard, including driver's license applications, social security applications, passport applications, government applications, financial applications, school applications, asylum applications, e-commerce transactions, or others.

For ease of explanation, the following disclosure references a preferred embodiment of the invention, whereby the system provides a platform for automated and secured processing of visa application filings. The disclosure is intended to present a universal visa application process that is configured to comply with varying global governmental regulations, provide a secure means to receive and store personal authentication data, all while assuring the accuracy of personal information provided in connection with the application. Simultaneously, the present invention presents a single platform by which multiple visa applications for unrelated countries and travel can be requested and obtained.

The present invention also provides an automated process for creating a unique multi-modal biometric token for a user, reading and storing biometric data for future use and authentication by the user, to avoid the need to duplicate effort for future transactions requiring identical information. Multi-modal biometrics refers to the use of a combination of two or more biometric modalities in an identification system. Such data can be stored in a biometric vault connected to the app-based system presented herein, which is designed to store user data in a manner which can only be accessed through biometric identification of the user associated with a given account. The present invention further provides an automated process for authentication and verification of user data, and scoring the likelihood that a user is who they say they are.

Finally, the present invention provides an automated mechanism for scoring a user application to help the relevant government authority assess whether or not to grant the requested visa.

### BRIEF DESCRIPTION OF THE DRAWINGS

FIG. 1 is a flowchart of the system of the present invention;
FIG. 2 is a high-level depiction of the process of the present invention;
FIG. 3 is an exemplar of the biometric identification of the present invention for user access to the app;
FIGS. 4A-4B depict the process of authenticating a user profile associated with the present invention over time;
FIGS. 5-6 depict the fusion biometric score of the present invention;
FIG. 7 is an example of the back-end processing conducted in relation to assessing a profile score for a user;
FIG. 8 is an example of the cross-referencing done by the system of the present invention in connection with scoring a user visa application;
FIGS. 9A-9B depict an example of weighted factors used to create a profile score;
FIG. 10 is an exemplary process for creating a profile score for a user based on the factors weighted in FIGS. 9A-9B;
FIG. 11 is an exemplary check list when creating the profile score seen in FIG. 10;
FIGS. 12-13 are an exemplary process for creating a random digital password for a user account and applying it to the user account for transactions;
FIG. 14 is an exemplary process for cross-referencing documents uploaded by the user in connection with the application filing;
FIGS. 15-19 provide a flowchart of method detailed by the present invention as seen through graphical user interface images of the mobile app; and
FIGS. 20A-20E depict the biometric vault of the present invention and the process of retrieving data stored therein.

### DETAILED DESCRIPTION OF THE INVENTION

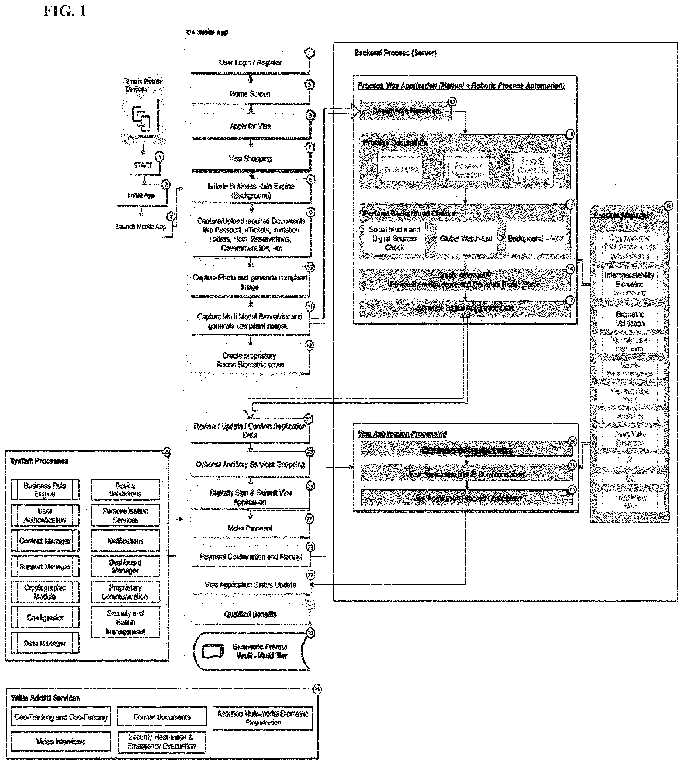

FIG. 1 is a flowchart depicting the automated process of applying for a visa and the flow of information of the present invention. It is envisioned that the present invention system can be used on any intelligent mobile device, including a smart phone, tablet, iPad, personal digital assistants, or other smart device, and is intended to comply with all operating systems including Android and IOS. Although not the preferred embodiment, it is also envisioned that the present invention system is applicable with laptop or desktop computers, or any other device having a memory and processor and connected to the internet. In any embodiment, the system of the present invention is configured to communicate with external entities, including government agencies, for application or transaction processing via a network such as over the Internet. The following details the series of steps outlined in FIG. 1 in connection with the present invention system.

In Steps 1-3, the app associated with the present invention is downloaded and installed or, if already available, launched. In Step 4, the user is asked to log in with a user ID and password. If the user has never previously accessed the app, he or she will be prompted to register. In order to register, the user will preferably be asked to provide his or her full legal name, phone number, and at least one form of identification, such as social security number and/or passport number. Preferably, the app of the present invention is configured to correlate the user's mobile device number to the user's account. This serves a dual role: first, the phone number and pin act as a point of authentication for future account access; second, this ensures that only the one user, from one device, can access the user's account and personal data which is uploaded and controlled by the user to the system, but stored locally on the user's device connected to his or her account. This last piece is a significant upgrade from existing technology, where information and data uploaded to a cloud-based or web-based system is stored in a remote location and managed through the system and by a system operator/administrator. In the present invention, all user data is stored locally on the user device associated with the user's account, and individual pieces of data can be pulled by the system from the local data storage when needed for application or transaction processing.

Therefore, even if the user's device were lost, stolen, or hacked, the user's account and data stored in the biometric vault thereof would be shielded from theft or unwanted access. This adds an additional layer of security from most mobile applications. The system also preferably provides a one-time password ("OTP") validation upon registration so that the user can verify himself/herself for registration purposes, and also to confirm that the user device accessing and installing the app does in fact belong to the user. Acceptance of the OTP in a set time frame after being provided (e.g., within 60 seconds) can establish the mobile device availability and ownership with the rightful customer and fulfil the process of mobile number verification and completion of the registration process It can also authenticate the user's mobile device, which may also be configured to provide the device's geo-location to the system. Post the password set up, the user is preferably asked to accept a 'User Agreement' and 'Privacy Policy' of the system.

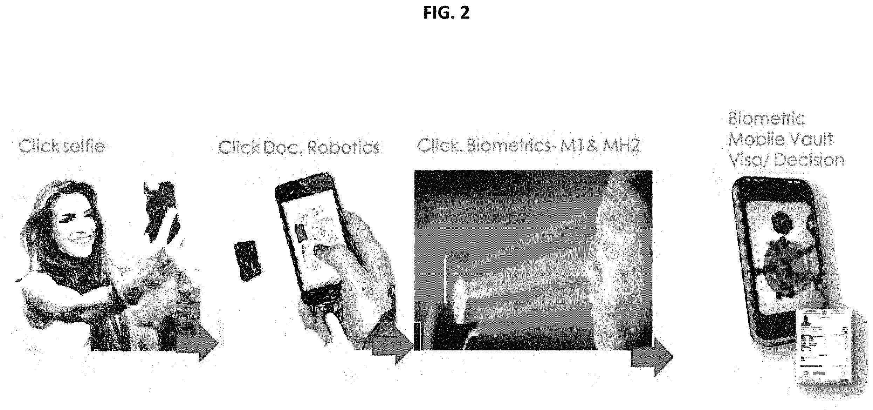

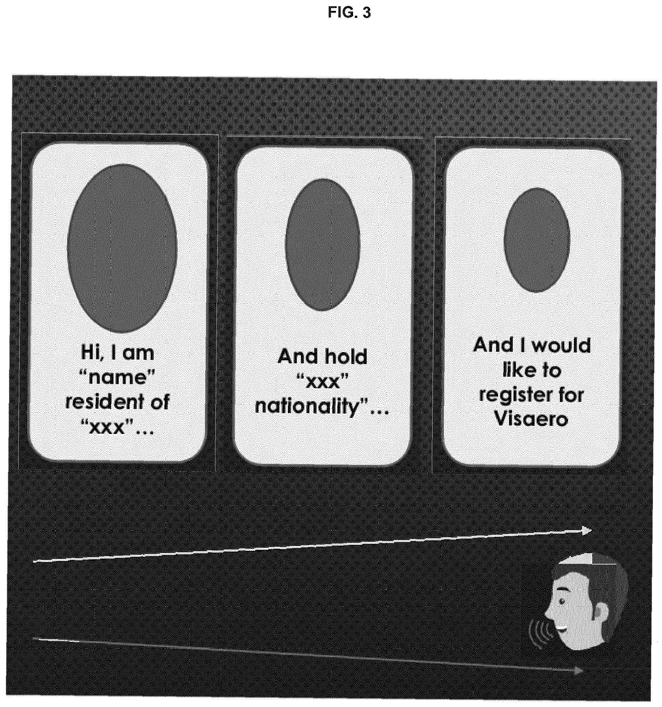

A high-level overview of the process of the present invention can be seen in FIGS. 2-3, showing the capture of multi-modal biometrics from a user and storing the same in the biometric vault, and using those biometrics for user registration and access to his or her account, along with device geo-location. In the example seen in FIG. 2, robotic process automation (which is discussed below in greater detail) is used for filling out forms through the system of the present invention, and biometrics are scanned in connection with the application. The final product of the application a visa in this example is then stored in the biometric vault for future use by the user.

The user's mobile device and the associated number are crucial to the invention, as they form the basis the user's account, both for geotagging the country in which the device is located, providing a calling code for the device, and suggesting the language in which the app is presented. The geo-tagging feature is preferably powered by global positioning system (GPS) or satellite positioning used by the mobile device, and based on the position and co-ordinates of the metadata. For example, a mobile device number geo tagged and registered in India will have its default country calling code as +91 followed by ten-digit calling number, unique for the respective customer.

Furthermore, upon registration by a user, the system may be configured to identify any of the following legally available information regarding the user's mobile device, to help link the mobile device to the user account: True IP, Geolocation, Time zone, Network, Carrier information, Device ID, IMIE, Home or roaming, Jail break, Device language, Device name, UDID, Device binding, ICCID, dual sim information if applicable, MEID, OS details (e.g. OS version, build number, kernel version, baseband version, KNOX), and any other details about the device and owner that can help establish true identity.

When a user downloads the app of the present invention, the app is configured to perform a pre-requisite check to confirm the compatibility of the app on the user's given hardware and operating system. Assuming the check meets all the minimum requirements for compatibility with the user's device, the app can be installed and accessed.

Once the user has registered for the app, he or she will use the "Login" portal for future access.

In Steps 5-7, once the user has entered his or her account (by registration or log in), the user will be prompted to enter the home screen, and enter information regarding travel plans, including the intended countries to visit, the user's country of residence and citizenship, the proposed dates of travel, and the number of travelers in the user's party. It is envisioned that the app of the present invention could suggest possible travel dates based on activity occurring on other apps of the user's device (e.g., the calendar app). Next, the user can be prompted to select the type of visa of interest. In many instances, different visa options are available, including transit visas, student visas, tourist visas, government visas, or others. In order to ensure that the proper requirements are met, a business rules engine of the present invention is provided (as seen in Step 8). The business rules engine is an intelligent server component of the app which is configured to communicate with, search, and review publicly accessible databases e.g., government websites, embassy information, and others which provide guidance and instructions for visa applications in each particular territory. For example, once the user enters the country of interest for travel, the business rules engine is configured to automatically and in real time identify the most up-to-date publicly available information regarding visa applications for that country, and identify the necessary requirements to the user. This can include, but is not limited to, the application forms to be completed, the number and size of pictures required, the documents which must be submitted, and the application fee. The business rules engine is also configured to use the geolocation of the mobile device to establish the currency in which the visa will be paid, and relevant national taxes required.

As a baseline, the business rules engine is configured to utilize the most comprehensive and stringent rules for application filings which can be universally applicable. Those universal parameters can then be cross-referenced with country-specific data for submission of applications in a manner consistent with each government's requirements. The business rules engine is preferably configured to continuously learn through artificial intelligence ("AI"), machine learning, and robotic process automation ("RPA") to update requirements in real time and retain such information for future application purposes, so that all data is cross-referenced in real time each time a visa application is requested.

Next, in Step 9, the user will be prompted to upload identifying documents for the user and any other traveler in his party, both for validating identifies and for submission of the visa application(s), as required to complete necessary information in the selected application forms. This could include photos the app preferably ask the user and each traveler to take a selfie for upload, though the upload of previously-taken photographs is possible, copies of passports, hotel and travel booking confirmations, bank statements, and any others as may be required. The app may ask for images of passports to be uploaded, and/or it may ask for passport data to be input. Please note that the specific order in which any of the aforementioned steps occur is not set in stone, and may be altered in variations of the system.

Upon scanning or uploading of a document, it is preferably immediately sent to the server of the app and reviewed to confirm that all requirements are met (e.g., does the name on the passport match the name entered into the system, or does the airline reservation match the identified dates of travel). The business rules engine is configured to process multiple steps of review to confirm authenticity of the user and the documents provided, and such review and confirmation is preferably done in real time and instantaneously upon upload. This can include reviewing any and all of (1) personal data of the user (e.g., name, nationality, sex, age, marital status, familial data), (2) the passport itself (e.g., name, date of birth, number, expiration date, issuing authority), (3) travel information (e.g., dates of travel, purpose of travel, destination, hotel or place to reside during travel, airline reservations), (4) photos of the user, (5) background information (e.g., educational history, financial data, criminal record, past travel, religion, watch lists medical data), and any other information about the user that is provided or is publicly accessible. The purpose is to ensure that the documents are all accurate, authentic, and valid, such that they do not need to be re-entered or re-confirmed each time a transaction is desired through the app.

In Steps 10-11, the user is prompted to upload biometric data to authenticate himself or herself and others in his or her party. This may include, for each individual, still photos and/or live videos taken via the front and back cameras of a mobile device, which may be used simultaneously to capture both static images and video of the user. All images and videos are preferably time stamped for accuracy, and can be valid for a set period of time (e.g., two years), during which the subject of the image or video will not need to provide updated versions for each future transaction. Artificial intelligence ("AI") and machine learning will preferably be used to enhance image and video quality. The combination of live video and still images can ensure that sufficient data is captured to meet all country requirements. In an embodiment, the system can employ watermark creation on the images and video to prevent against alterations. Preferably, the system is configured to recognize any or all of face shape, ear shape, eye movement patterns, iris scans, fingerprints, and other pieces of biometric data to ensure accuracy in the user application process, such as depth of features, liveness, skin texture, dermal vasculature, heartbeat video analysis via motion magnification, optic flow, or color enhancement. The system is also configured to run accuracy and authenticity checks on multiple identity cards for the user, such as a driver's license or credit cards. Once the biometric data is captured, it is preferably stored in a biometric vault, configured for storing biometric data in a secure fashion that can only be accessed by the user on their authorized mobile device. The biometric vault, which will be described in further detail below, preferably uses multi-modal layered encryption technology to securely store the user's biometric data. Multi-modal layered encryption is the process of encrypting data multiple times using the different algorithms, wherein the algorithms are each represented by a different biometric identifier of a user.

The aspects of Step 11 are an important feature of the present invention. Upon upload of multiple pieces of biometric data, a multi-modal biometric identification is created for the user. Some countries require fingerprints, while others require iris scans, while others do neither. Thus, it is a goal of the present invention to create a universal standard for authentication using a combination of biometrics, and confirming the identity of a user associated with a particular account each time the account is accessed. Thus, the various pieces of biometric data will be reviewed, and any of user voice, face shape, eye scan, fingerprint, or other data can be required to enter the user's account on the app of the present invention, and confirm the user's identity. In addition to biometrics, the system may capture behaviometrics such as manner of speech or activity on the mobile device and conduct an analysis on the user. Behaviometrics is a measurable which focuses on behavioral patterns rather than physical attributes.

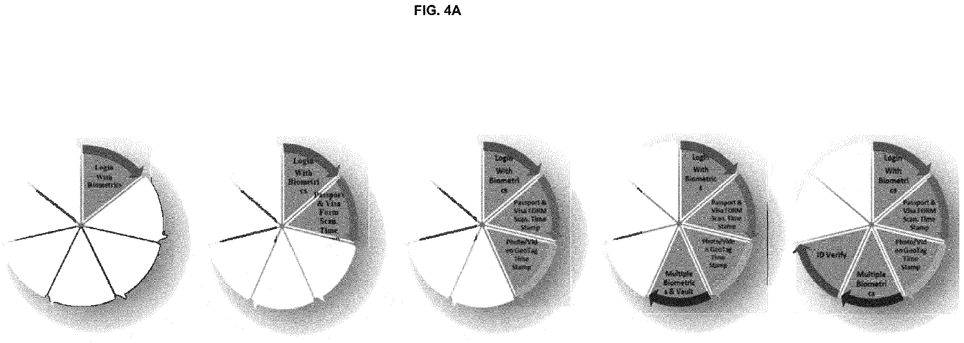

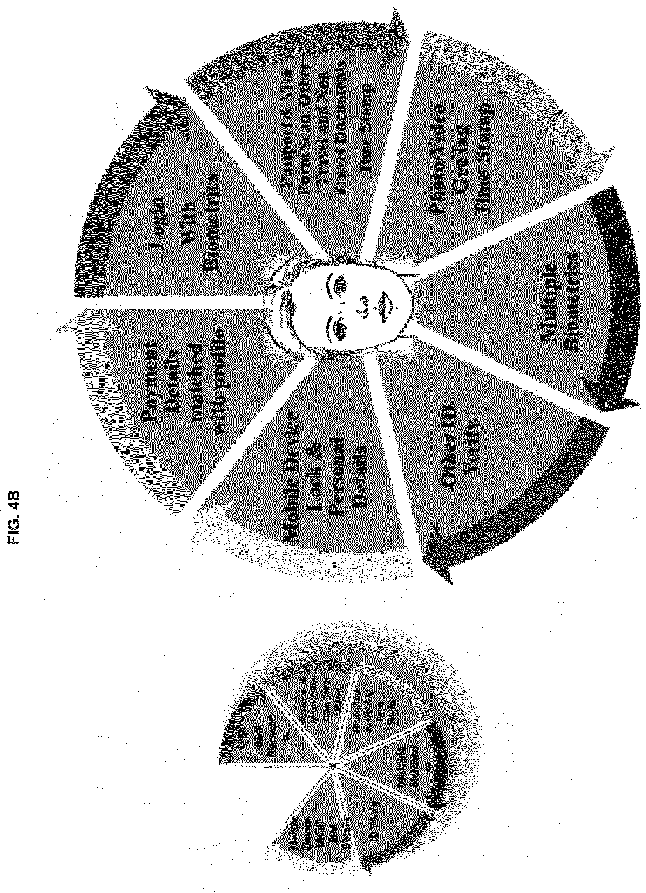

It is a goal of the present invention that the system will interface with all government entities not only for the purpose of obtaining the necessary information regarding visa options and requirements, and the forms required therefor, and for fast-tracking the filings thereof, but also to create a universally accepted certification of the multi-modal biometric identification and fusion biometric score for authenticating users. In addition, it is envisioned that as transactions are entered into by the user through his or her account, more and more information regarding the user is obtained for authentication purposes. All of this helps to establish a 360 degree build-up of the user's profile, which ideally becomes more fully tied to the user and hack-proof as time goes on. An example of this can be seen in FIGS. 4A-4B. In this example, a user starts to create their profile by logging into the system using multi-modal biometrics (as described above). In connection with pursuing at least one application within the system, the user will upload various documents such as a passport and other identification and travel documents, which will add to the user's profile. Then the user's self-image and video will be added for authentication and time-stamping, along with various forms of biometrics that can be stored in the vault. Any other possible identifying information required by applications will be added, and the user's mobile device will be registered in connection with his or her account for local data storage and future access. Finally, the user's payment details will be added to his or her account to complete a transaction or application. All of this collectively will built the user's 360 degree profile, ultimately intended to ensure that that account is hack-proof and mistake-proof when storing such sensitive data.

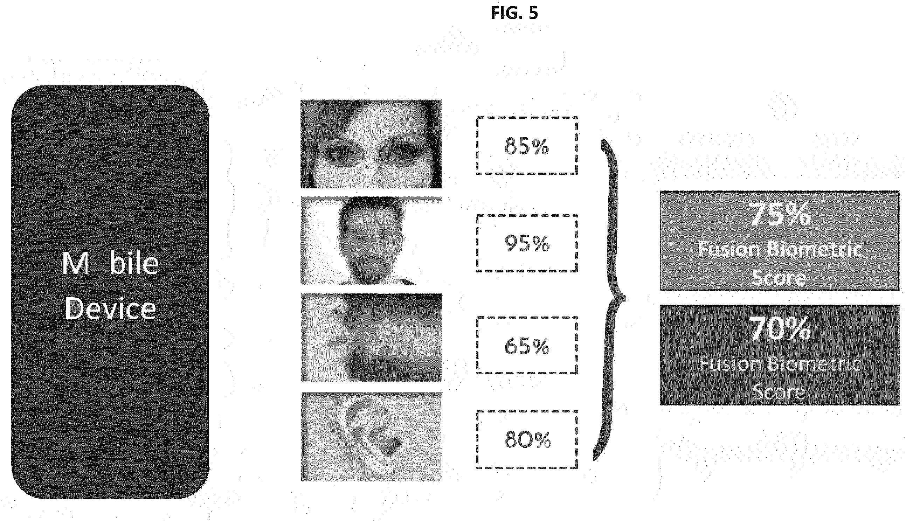

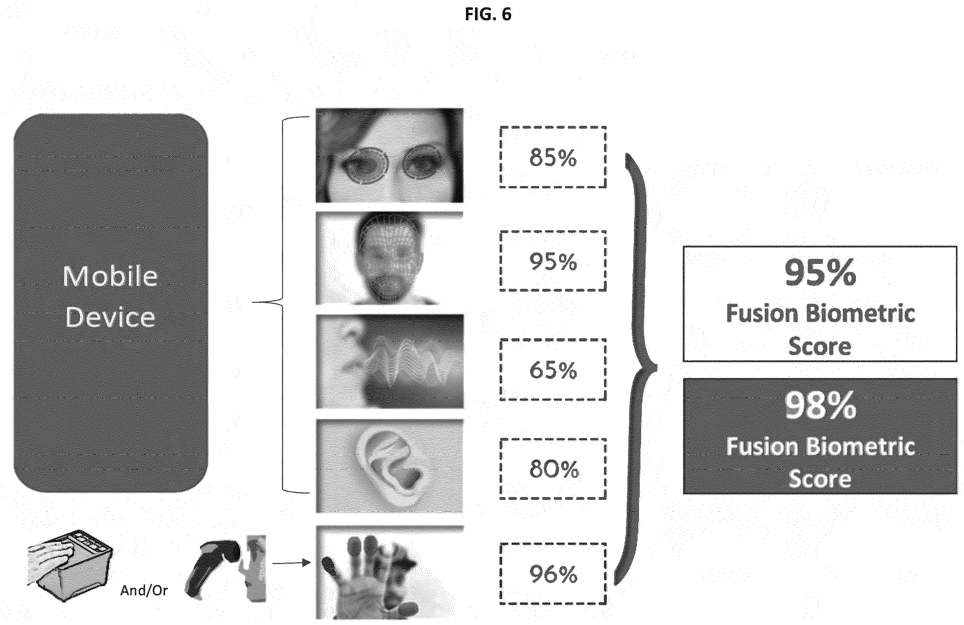

Once all of this data has been obtained, the system will create what is known as a fusion biometric score in Step 14, and also as seen in FIGS. 5-6. Each individual piece of biometric data can be reviewed, scored for readability, and then weighed against the other pieces of data. Collectively, the combination of multiple points of authentication data, as employed by the present invention system, significantly increases the chance of verification of the user without risk of mistake. That is, while a single piece of data may be forged, it would be significantly harder to mistake an iris scan, face shape, voice module, and fingerprint scan, all for the same user. After reviewing and weighing each piece of data, the system is configured to provide a score. As seen in FIG. 5, depending on the weighted score, it is possible that it may or may not meet a required threshold for acceptability in the application. In FIG. 5, a weighted score of 70% accuracy would not be deemed acceptable, but a weighted score of 75% would be sufficient. In FIG. 6, an additional piece of data obtained through an external biometric hardware device e.g., fingerprint scan or iris scan is added to the weighted equation. In this example, the possible fluctuation of weighted score from 95%-98% accuracy are both deemed acceptable for the application process.

When all of this is done, the system is configured to flag any issue or potential mismatch, and generate an alert halting the process to confirm whichever piece(s) of data appear improper. The system is configured to ensure that all cross-referencing has been completed before allowing the user to proceed forward with the application process. This is intended to prevent not only hacking and fraud, but also unintentional discrepancies, such as a change in name after marriage, or a change in address since prior government documents were issued. This presents a significant upgrade from currently known and accepted systems.

An exemplary process for creation of the multi-modal biometric identification is as follows: Upon opening the app, the user is prompted to read specific text to capture the user's voice, tone, inflection, and speech pattern. Then the user may be prompted to bring the device closer and read new text, to confirm the aforementioned data regarding a user's speech. This can also result in capturing two images of the user's face at different angles. The user may also be asked to take selfies and video at other angle, so that a full facial depth and shape can be identified, while simultaneously capturing the user's eye shape, ear lobe shape, iris, blinking patterns, and facial movement. In addition, the system can identify the geo-location and device information for the user's mobile device which will be linked to the user account. All of this will be joined together for the fusion biometric score. This can be seen in FIG. 5. In a second exemplary process for creation of the multi-modal biometric identification, the user will be prompted to provide a fingerprint capture in addition to the data provided taken above. This can be seen in FIG. 6.

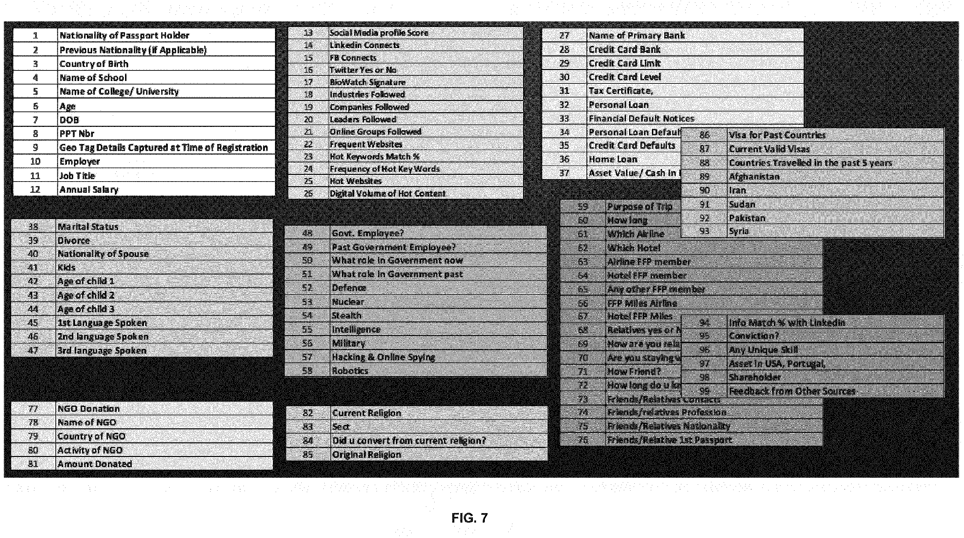

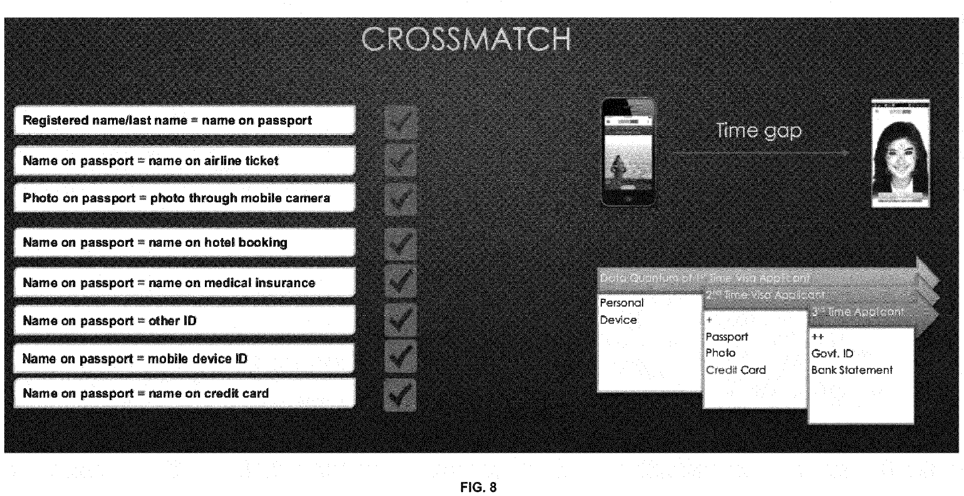

While the user is uploading the required biometric data, the system is configured in Steps 13-17 to run back-end processing of the uploaded data, check the name and data entered by the user, and determine if any inconsistencies arise, all in connection with issuing a profile score and recommendation. This back-end processing can be seen in FIG. 7. The system is also configured to cross-reference the user data against multiple parameters, as seen in FIG. 8, including passports, hotel bookings, airline tickets, insurance information, driver's licenses, credit cards, bank statements, government ids, and more. The parameters are weighted to create a profile score, and the profile score can be altered as the weight of different parameters may be altered. This process can include cross-checking the user's travel plans and hotel reservations. It can include information regarding the user's employment, family data, citizenship, government service, reference on government watch lists, past travel to countries with extremist groups, credit card activity, social media and internet posts, and others. The social media searches can look for hot words, key words, insights, data analytics, or socio-metrics to identify past behavior and predict future behavior of a user. The system is also configured to check over 3,000 government and private published watch lists, lists of users covered by financial global sanctions, as well as publicly-accessible databases identifying individuals with criminal backgrounds or purported ties to any of terrorism, the dark web, fraud, financial crimes, or other disciplinary action that may indicate a desire to leave the country. It is envisioned that the present invention can use artificial intelligence, machine learning, and/or robotic process automation to decipher accurate or fake information (e.g., fake ID, fake news sites), identify keystroke dynamics, voice print, device usage, signature analysis, and error patterns, all in helping formulate the profile score.

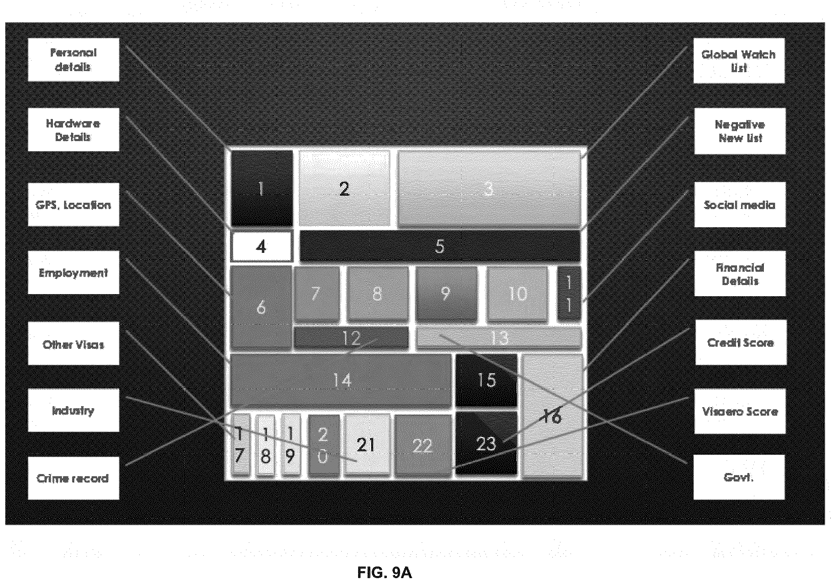

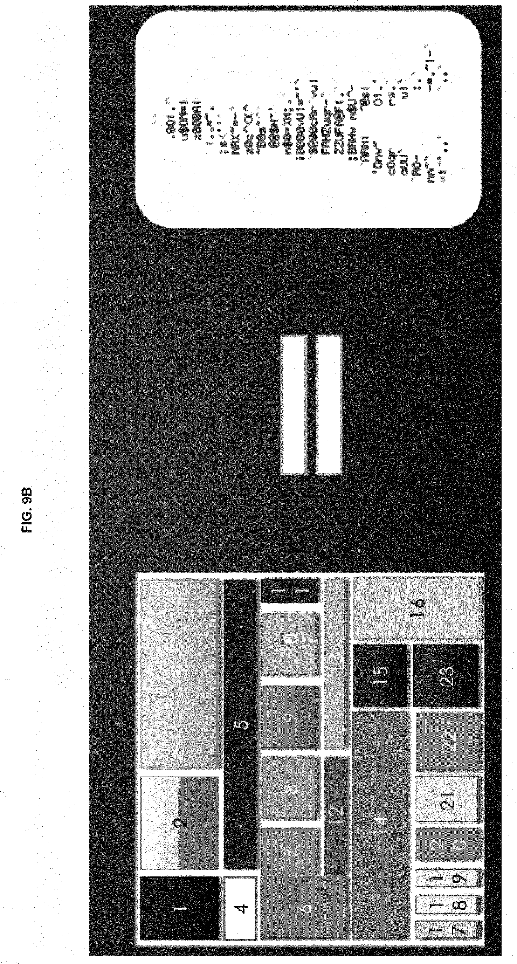

The process of weighing all of the factors against one another to create a profile score can be seen in FIGS. 9A-9B. Each individual factor is weighed against the others based on a determination by the system as to each factor's relevance and likelihood of affecting the outcome of the profile score, either positively or negatively. As seen in FIGS. 9A-9B, the size of the boxes 1-23 represent the weight of each factor. It is possible that the weight of various factors can change in real time based on updated change in circumstance. Although not limiting, the factors to be weighed may include personal details, hardware details about the user's device, GPS coordinates of the user device, employment data for the user, prior visa applications which the user has sought and/or obtained, the industry in which the user works, salary range, age, education, criminal record, marital status, nationality, travel history, any global watch list hits, negative lists of prohibited conduct, social media posts, financial details, credit score, government information, and a prior profile score issued by the system for the user.

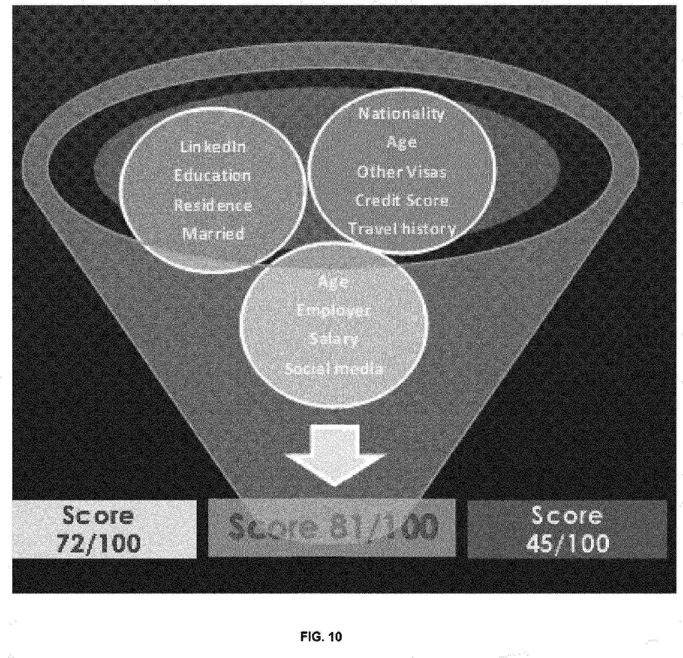

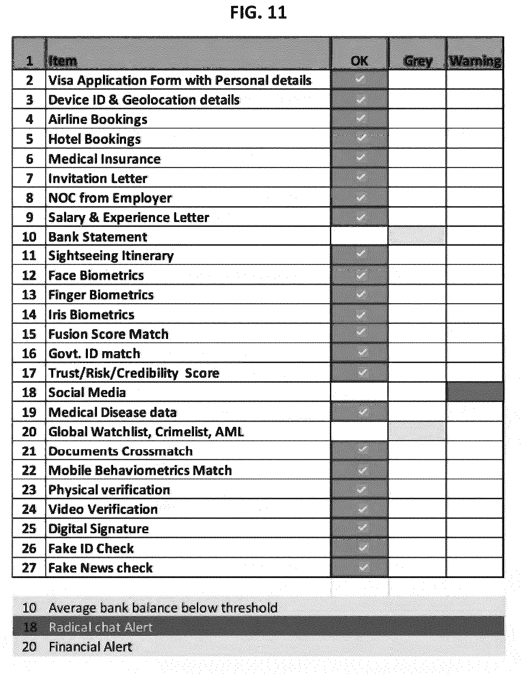

Based on those factors, the creation of a profile score can be seen in FIG. 10, and a check list for creation of the profile score is seen in FIG. 11. All of these checks can help the system grade the user and provide a recommendation as to whether the user should be granted the visa which is being sought. This process is itself a significant upgrade to the current visa process, which has no universal method for identifying user activity to identify potential threats, fraudulent activity, or pretense for travel. The profile score, which preferably applies a universal cross-reference for all applicants in all countries without prejudice or preconceived opinion, can provide the profile score to the relevant government authorities, which can help speed the process for approval or denial of the visa application request.

All of this will allow the system to easily and conveniently apply the profile score to every user and provide the same to any government for which a visa is applied, further assisting in the automation of visa processing. If each government relies on the same scoring system, and requires a certain score threshold to award the requested visa, the system can ensure universal standards are applied to users without risk of prejudice or bias in the application process. This will also help the user's future visa applications to be further expedited as a score will have already been applied and can simply be validated to ensure no change in circumstance. In a preferred embodiment, the user will not be made aware of the profile score issued by the system to the relevant government authority. Instead, it will be transmitted on the back end in connection with real-time processing of the application for approval or denial. This is particularly important where an issue is flagged causing the profile score to be lowered potentially below the acceptable threshold for approval by a given government entity.

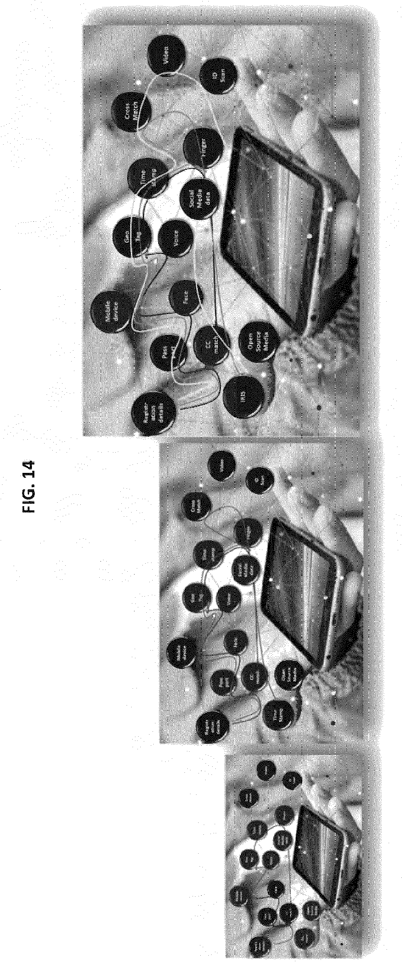

The system is configured to access governmental systems for visa applications, not only to provide accurate examples of the visas which are available for users in any given territory, but also to ensure compliance with local regulations regarding information required for the application process. By obtaining this data, the system can preferably ensure that it only provides options to the user that would be eligible for grant by the selected countries to be visited. In another embodiment, the system may be configured to only provide access to certain, more universal visa types, which are common throughout most countries, while prohibiting access to certain others (e.g., the system may allow a user to seek a tourist visa but not a government service or diplomatic visa). In all embodiments, documents uploaded to the system are configured to be cross-referenced with respective government requirements and validated in real time, as seen in FIG. 14. It is envisioned that the app will simultaneously process user information and approve documentation required for country-specific visa. If the submission does not meet the necessary requirements, the user will be notified immediately so as to provide the opportunity to supplement with the missing pieces of the application. This avoids undue processing delay, which is traditional in the visa process, whereby a user submits the forms in person or by mail, and must then wait to determine whether he or she has met all requirements, and either receive the visa or receive notice of a defect in the application. Preferably, none of the data or documentation provided by the user to the system is downloadable by the respective governmental authority, but rather is viewable for review and approval or denial. In an embodiment, it is envisioned that the application process of the present invention, and the profile scoring, can be done via blockchain or digital token creation, and stored on a ledger. This will also assist in validating decision-making in the process and preventing undue bias or prejudice (whether intentional or inherent) in the approval process. Over time, as transactions through the app of the present invention are entered, more and more data from the user will be available in the vault to hopefully ensure that all necessary information is available for new applications.

It is envisioned that the present invention system could also include one or more of the authentications conducted in the multi-modal biometrics could occur in person, over the phone, or by video conference. In an embodiment, it is envisioned that the present invention may include an external hardware or device for capturing biometrics or other data, such as a fingerprint scanner or video machine for conferencing. This additional step may be warranted based on particular requirements of a jurisdiction for which a visa is sought, or may be recommended by the system based on the profile score for a particular user. For example, in the case of the latter, if the cross-check conducted at Step 15 suggests a discrepancy in the information provided by the user or a bad faith reason for the travel, and the resulting fusion biometric score is near or below a particular threshold for denial of the visa application, the system may recommend that the user be required to appear in person at a consulate or embassy for questioning to assist in the decision-making process.

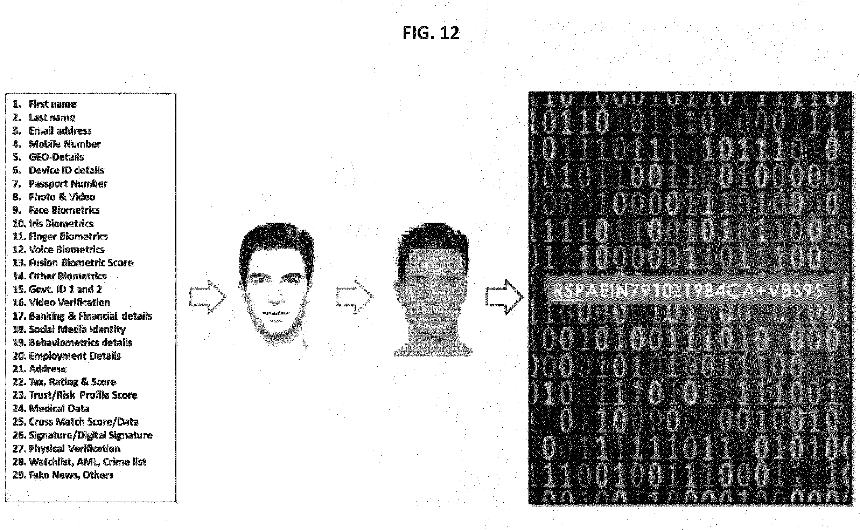

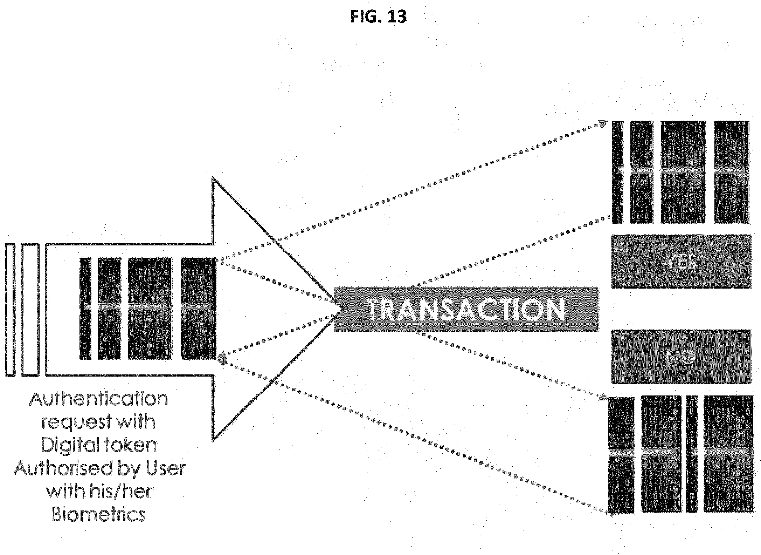

After all of the biometric data has been uploaded as referenced above, it is preferably stored in a biometric vault of the present invention system. The vault is preferably configured to protect the data by means of multi-modal layered encryption, and prevent access to the data stored therein without user consent and multi-modal biometric identification, and preferably uses a blockchain-based digital code to authenticate the user and the biometric data stored therein for future use. The biometric data is preferably transmitted to and from the biometric vault using a proprietary communication methodology which provide a secure, trackable, and audited ecosystem for data transmission, storage, and access. A process for creating and applying a digital smart password can be seen in FIGS. 12-13. This will help prevent fraud in visa applications or any other transactions for which the present invention system is used, requiring validation of user identity to retrieve sensitive biometric data which can be used for access to future transactions. The system is preferably configured to analyze the stored biometric data when a transaction is initiated, and pull for the application only those pieces of data that are required to meet the country requirements which are the subject of the application. Preferably, all data is stored in raw form, and images or reproductions of that data is transmitted from the vault to a government entity when needed for inclusion in an application. As seen in FIG. 13, the digital smart password will either be accepted or rejected, thereby allowing the requested transaction to proceed, or stopping the process from moving forward.

As noted, the present invention system and vault are preferably designed to be applicable in any industry and in connection with any type of electronic transaction, and the app can be customized based on the requirements or specifics of a given industry.

In a preferred embodiment, the vault may have three or more tiers which are configurable as needed, each having a different type and/or level of encryption: Tier 1 may be accessed a top-level biometric identifier, such as a facial scan or finger print, for user authentication when accessing the user account; Tier 2 may require a passcode, whether alphanumeric, hashed, encrypted, or a digital smart password; and Tier 3 may be inaccessible to the user or anyone else, but can store the biometric data or other sensitive information, whereby the user's only access to the data stored therein is an ability to permanently shred or delete the same. The numbers of vault tiers and access solution models could be customizable and configurable by the user depending on the type of documents or data to be stored. Preferably, biometric data pulled from the vault for use in an application are not actually shown to the user, but rather they are pulled by the server on the back end and sent to the necessary government entity of the applicable jurisdiction(s) by one or more forms of encryption or protection for review and verification during the application process. Although images of the stored data can be sent repeatedly in connection with future visa applications for the user, the raw biometric images are stored in the vault and remain inaccessible by the user or anyone else. The user is preferably able to store raw biometric images for family members as well in the vault connected to his or her account so that applications can be filed collectively and simultaneously for multiple individuals at one time. It is envisioned that the system may incorporate a process for validating consent of family members to store their own biometric data in the vault of the user for future transaction use.

In an example using the three Tiers referenced above, Tier 1 of the biometric vault may contain immediate travel documents accessible through biometric authentication, Tier 2 may contain an electronic passport, government ID, or other sensitive data, which would require multifactor authentication to access including a biometric scan plus random digital password, while Tier 3 may contain the raw biometric data itself. It is envisioned that one or more tiers of the biometric vault e.g., in the example above, Tier 3 storing the raw biometric data may be configured to only store the biometric data and send the data for use in an application, such that the data stored held is inaccessible to the user once stored. This will mitigate risk of theft of personal biometric data in the event that the user's mobile device is stolen or hacked. Rather, these Tiers of the vault may only be accessible to the user to either pull data for processing in an application in which the data is sent directly to a government entity for approval of the requested visa and never actually provided directly to the user or for the user to shred, wipe, or delete the data. This feature allows users to wipe their account when it is not desired to be used, when the user is obtaining a new mobile device, or if any piece of uploaded data is seemed insufficient for application standards and must be replaced with a new version.

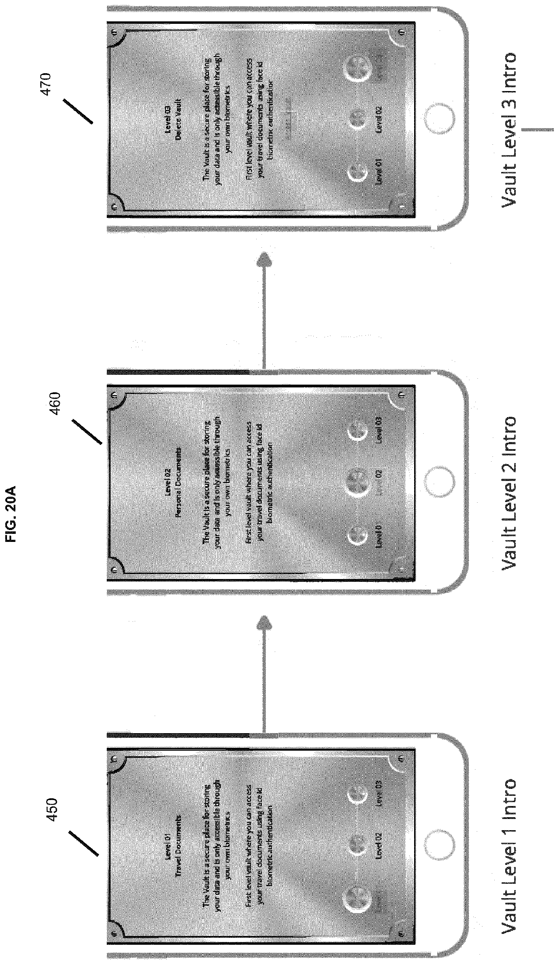

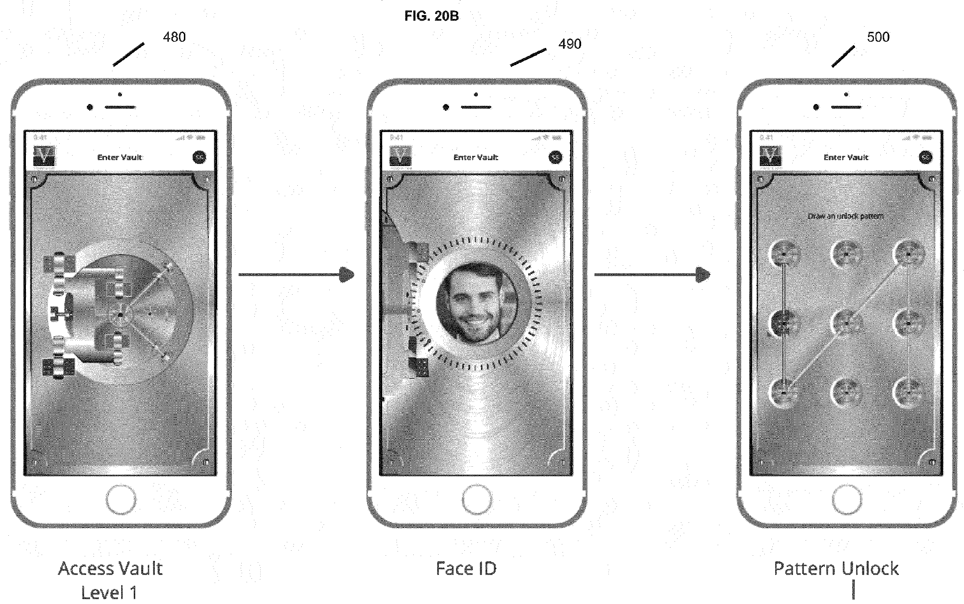

A process of accessing and retrieving data from the biometric vault of the aforementioned example can be seen in FIGS. 20A-20E. FIG. 20A provides sample images of the vault tiers which store data and can only be accessed through user biometrics. As seen, there are three tiers to the vault. FIG. 20B depicts a user access to Tier/Level 1 of the vault, which requires multi-factor authentication by the user. In this example, the user scans his or her face by the camera on the user device and a facial recognition is run. Assuming the user identification is confirmed, the user will then be asked to enter a password, which in the example seen is a pattern password to unlock this level of the vault. It is envisioned that any combination of multi-factor authentication may be used.

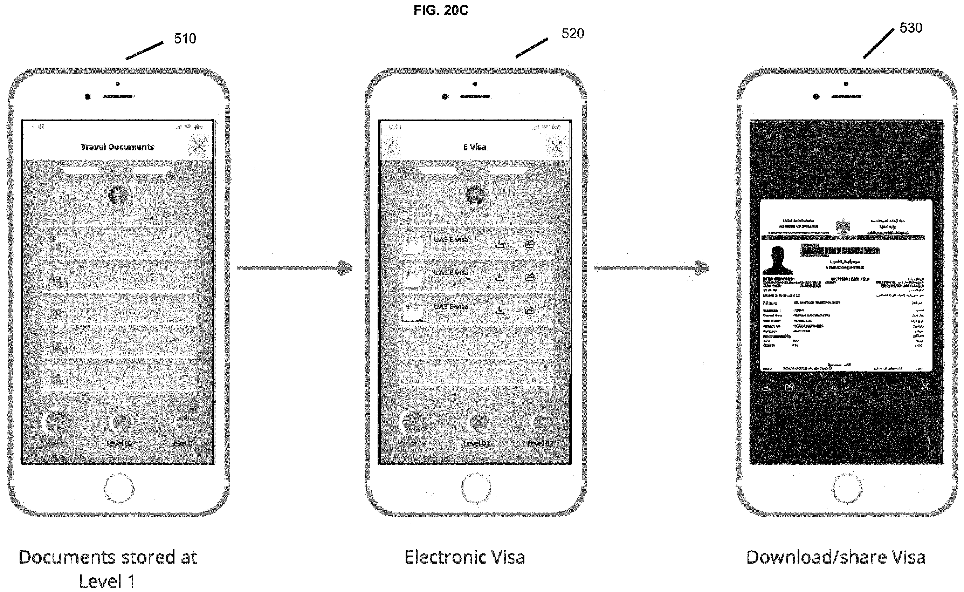

Once the user has been authenticated and granted access, FIG. 20C shows the process of retrieving documents stored in Level 1 of the vault, which can include electronic visas, airline tickets, hotel vouchers, sightseeing coupons, or any other non-proprietary information. Those documents can then be downloaded from the vault for use when needed.

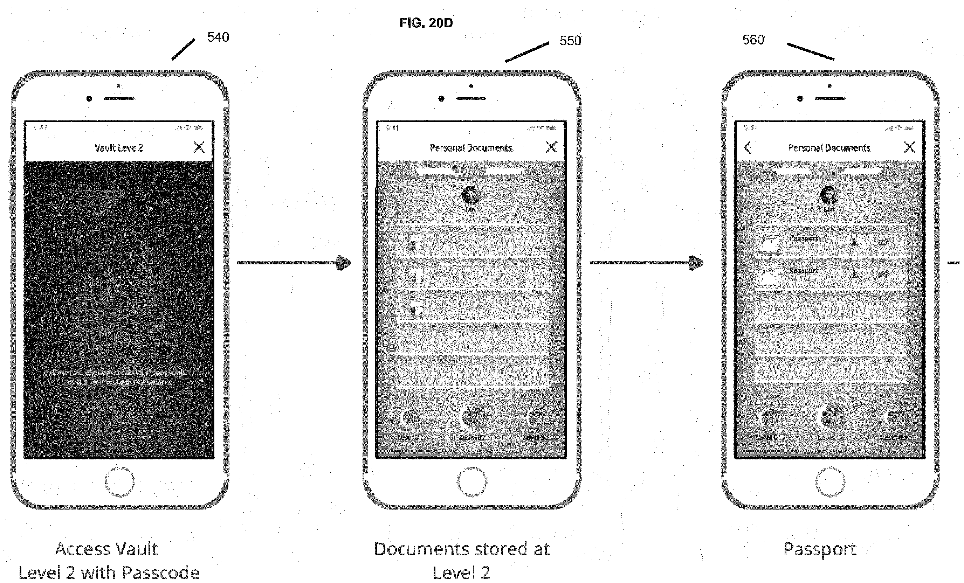

FIG. 20D depicts the process of accessing Level/Tier 2 of the vault, which requires an additional one-time passcode to access the same. As noted above, the one-time passcode is sent to the user device and must be entered within a specific, short timeframe for authentication. Documents stored at this level may be more personal and identifying, such as a passport, driver's license, or government ID, where security and protection is all the more necessary.

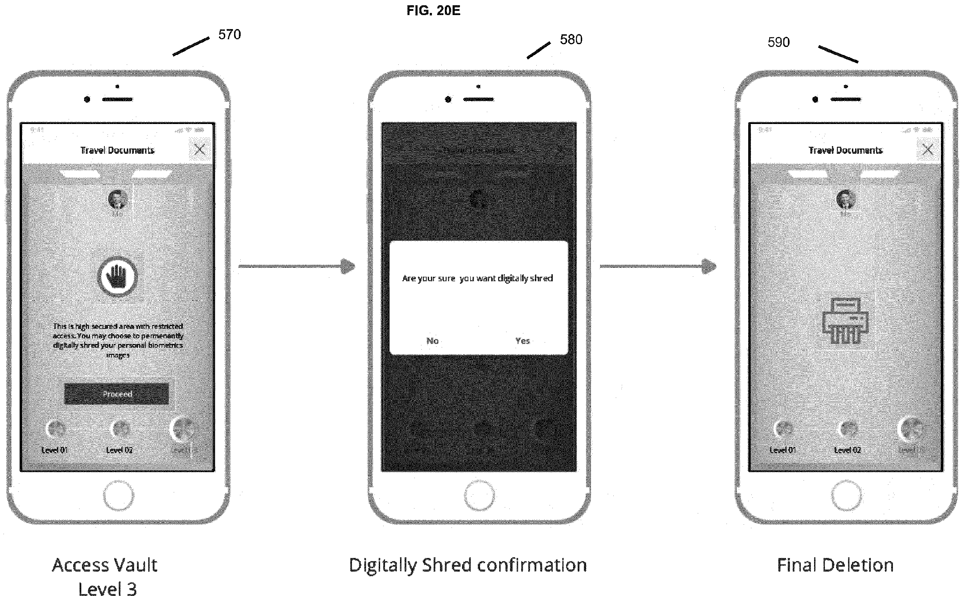

FIG. 20E depicts the user's attempted access to Level/Tier 3 of the vault. As noted, this most secure level which stores the user's biometric data is intended to prohibit any and all access. Therefore, if the user attempts to access this level of the vault, he will be stopped, and may only be given the option to digitally shred or destroy the data stored therein (for example, if the user realized an error in the document or in the scanning process, or wishes to no longer house data for an ex-spouse). This restriction on access is meant for security of the user, and ensures that no malfeasor can access the user's biometric data even if the user's device is stolen, lost, or hacked.

In addition to the encrypted vault, the system preferably includes encrypted virtual security armor ("EVSA"), which is a secure encrypted online platform housing the app which allows the app to act securely by linking to the mobile device's mobile operating system. The EVSA acts as a cocoon around the app within the user's mobile device, which allows the app to remain active and secure even if the user's device itself is hacked or tampered with.

In addition to storing biometric data for future applications, the system is configured to create a biometric template for the user, which will allow the user to access his or her account in the future. The biometric authentication template preferably includes some combination of multifactor biometric authentication, which may include two or more of a stored password, a one-time password, and one or more pieces of biometric identification which can be compared against the user's live biometric image or video capture for authentication. Therefore, the user will be able to access the app and enter into future transactions using the biometric and other personal data stored in the biometric vault by providing his or her biometrics. This allows the user to access anything stored in the vault including biometric data for his or her family for future transactions without being required to re-input the identical data over and over again.

Reverting back to FIG. 1, the system also includes a process manager in Step 18, by which the multi-modal biometric identification process may incorporate a genetic blueprint of the user to create a crypto-persona and obtain 100% confirmation of identity. The system can create a digital "DNA" of a user with pre-defined weightage for each of the data clusters and data subsets. The Digital "DNA" can encompass permissible and collected data from any one or more of, although not restricted to, the multi-modal biometric identification and behaviometrics, tax details, identity data and documents, device ID, medical genetic blueprint, medical data, and others. The medical genetic blueprint will preferably be lab tested to certify genomic sequencing for a user to unquestionably confirm their identity, potentially including chromosomal mapping.

The user will have an opportunity to review the application in Step 19. If any information is incorrect, the user will have a chance to amend or update the inputted data. Alternatively, if all information is accurate, the user can move the application forward for submission. In Step 20, the system may provide the option for ancillary services in connection with the visa application process, such as benefits, deals, coupons related to the intended destination of travel. In this case, the system is configured to interface with external websites to identify and provide such information to the user.

In Step 21, the user can digitally sign the application and submit the same. In Step 22, the user will be prompted to enter payment, preferably by means of a credit or debit card number, for the applicable visa application fees. Once complete, the application will be submitted, and the user will receive a payment confirmation and application filing receipt in Step 23. It is envisioned that the system may be configured to coordinate with the respective government offices during the visa application process to provide status updates to the user on the application progress in Steps 24-27, and the respective governmental authority may issue communications regarding the application, whether status updates or other information regarding requirements or deficiencies in the application. Once granted, the visa could also be stored in the biometric vault in Step 30, such as in Tier 1 of the vault which is accessible by the user by means of a certain level of biometric template access. It is envisioned that the actual visa itself may not ultimately be required to be transmitted or provided, but instead the user can be given a digital token representing the visa which can be authenticated upon travel.

After submission, the application can be assigned a unique confirmation number. The system can perform a quality check on the information data and documents, and then forward the application to the necessary government authority for approval. If any documents are determined to be missing, the system may send correspondence to the user to request additional or corrected information prior to releasing the application. This avoids the potential for rejection of applications based on ministerial errors, which can cause significant delay and frustration.

Once a visa is granted, the system may provide additional services and notifications to the user in Step 31, such as geo-tracking (e.g., weather patterns, natural disasters in the country of intended travel, meet and assist, sightseeing, emergency evacuation, or security advisory) or geo-fencing (e.g., blocking access to the visa unless a user is in a validated region). The system may also interface with a courier service to transmit hard documents between the user and respective government entity or embassy when physical documents are required.

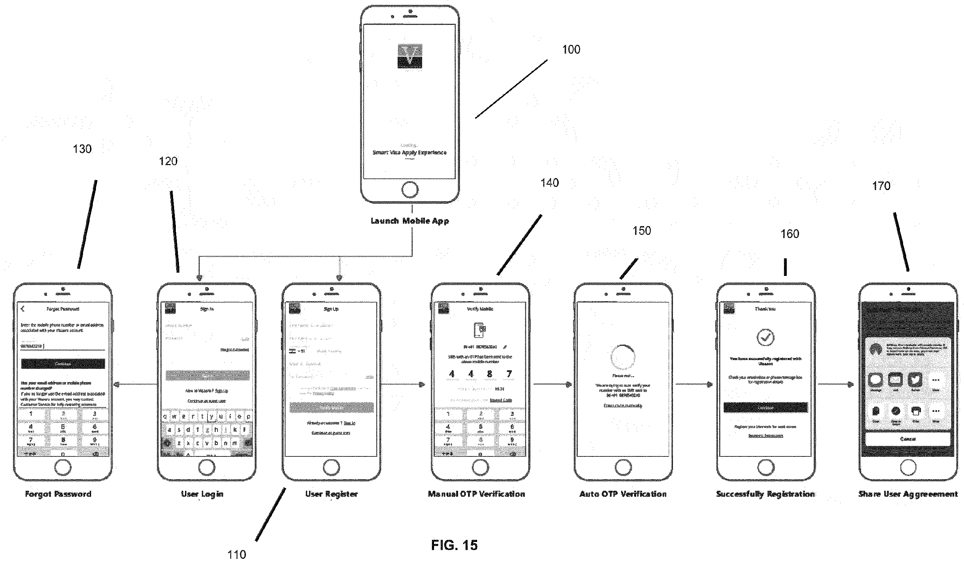

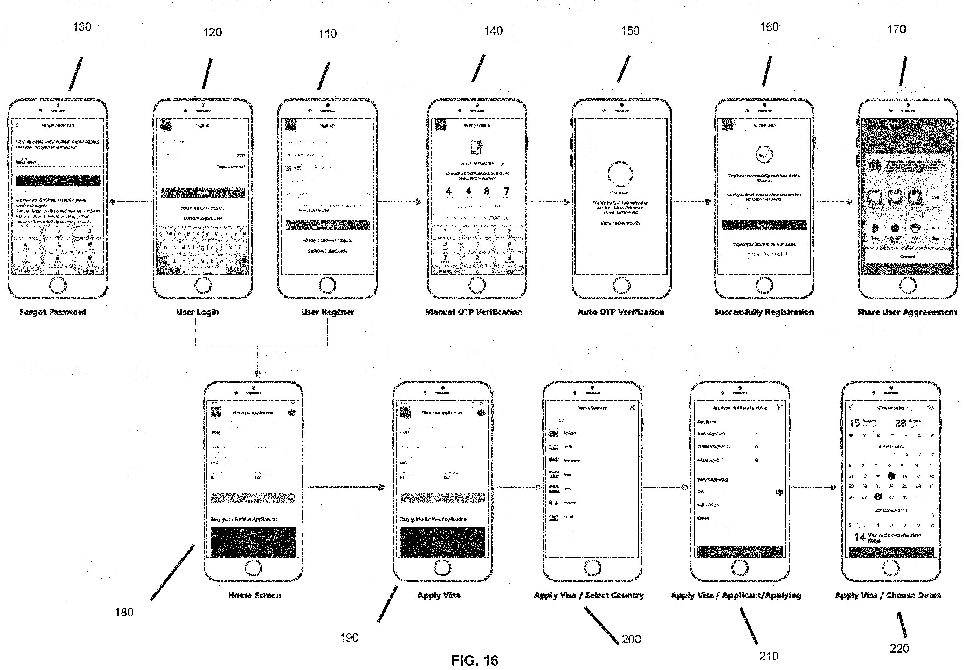

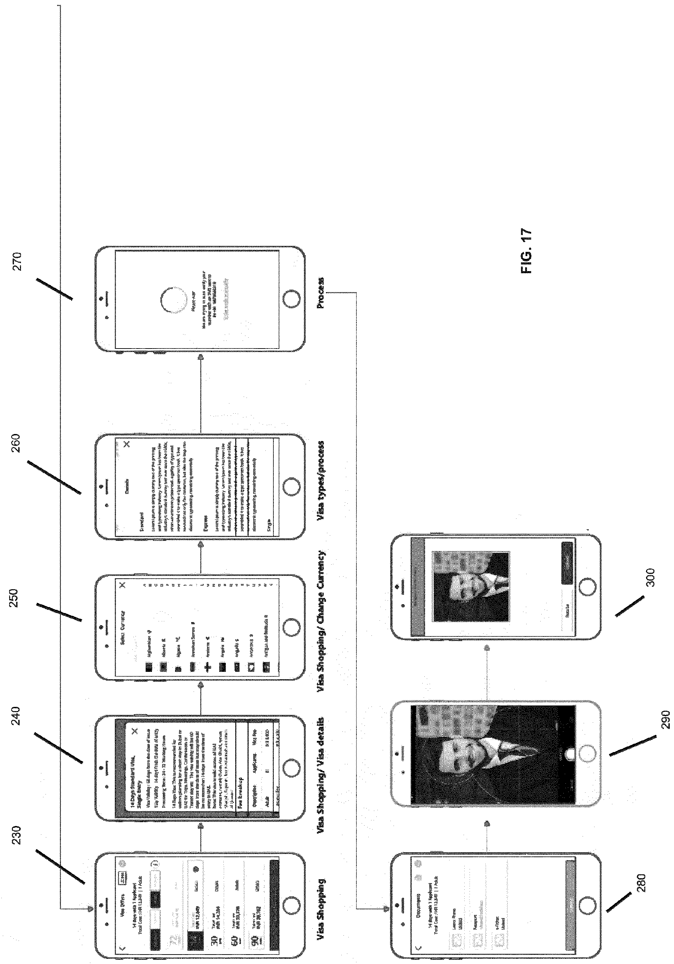

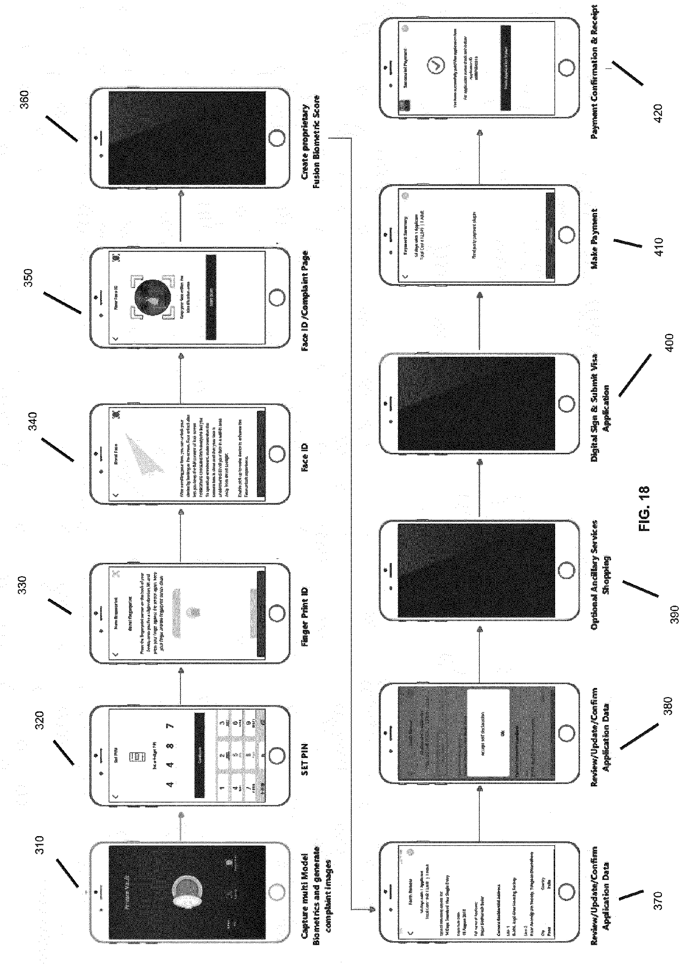

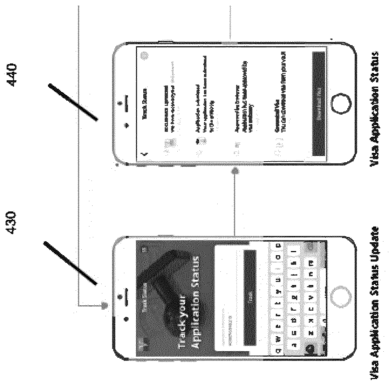

Having described the process of the present invention through the flowchart of FIG. 1, an example of the process of using the app of the present invention can also be seen in the flowchart presented in FIGS. 15-19. This flowchart is intended to provide a visual representation of the user experience of the app of the present invention, and the steps are intended to track those of the flowchart of FIG. 1. The process displayed in FIGS. 15-19 and discussed in detail below is intended to be one example of the process of the present invention, and should not be construed as limiting. It is envisioned that any steps in the disclosed process may be skipped or rearranged if necessary.

On screen 100, a new user can access the app of the present invention. If the user is a first-time user of the app, the user will be directed to screen 110 where he or she can register an account with the app, providing personal details such as first and last name, mobile number and email address, and create a unique password which will be used for future access. In conjunction the password set up, the user is preferably asked to accept a 'User Agreement' and 'Privacy Policy' of the system. Alternatively, if the user has previously created an account, he or she will be directed to screen 120 to log in to the existing account. Of course, if the user has forgotten the account password, the user can click through to screen 130 to re-set his or her password by entering the mobile phone number and email address associated with the user device connected to his or her account. Upon registration of an account, the user will be requested to connect his or her account to a mobile device, and a one-time-password will be sent to the device to verify the user, which can be entered at screen 140 (or which the user can re-request if it was not received) and can then be approved at screen 150. If all registration requirements are met and the user and mobile device are verified, the registration will be completed at screen 160, at which point the user may be asked to scan his or her fingerprint to allow for future access to his or her account by means of fingerprint sensor (as opposed to a password, not in place of the multi-factor authentication required). The user will then be required to accept the user agreement at screen 170. Once all of these steps have been completed, the user will reach the home screen 180 of his or her account. The user will be directed to home screen 180 each subsequent time he or she accesses the account. The home screen 180 preferably provides information regarding the general visa application process.

At screen 190, the user can initiate the application of one or more visas. At this screen, the user will be asked to input their nationality and country of residence. The business rules engine is configured to process residence and nationality for all individuals in the party based on the user input data. At screen 200, the user is asked for the country/countries of desired travel. At screen 210, the user can input the number of travelers in his or her party, which may be for himself or herself, the user plus other members of their family, or just other members of their family whose data is stored in the biometric vault of the user's account. At screen 220, the user can select the proposed dates of travel and duration of the trip. It is envisioned that the present invention will allow simultaneous visa filings for multiple countries.

At screen 230, the system will display the different visa options for the country/countries of desired travel, and the cost thereof. As noted previously, the business rules engine is configured to interface with internet sources and government agencies to identify, in real time, visa travel options for every country identified in order to provide accurate options for the user. The options may depend on the applicant's country of residence, days of intended travel, and the travel purpose. Preferably, the system is configured to provide all possible visa options which fit the parameters of the proposed travel. For example, if the entered travel time is two weeks, but a particular country requires a minimum stay of 30 days for a work visa, this option would not be presented to the user, as his entered parameters would not meet the required qualifications which the business rules engine identified. Preferably, the system can also identify options for single entry and multiple entry visas. If the user wishes to learn more details about the particular selected visa, they can click to view more details, and do so at screen 240. At screen 250, the user may select the currency in which they wish to pay for each visa having being selected for application in screen 230. Screen 260 will display an overview of the selection, and information regarding the nature of the selected visa and rules therefor. The application process will then move on, at screen 270, confirming that all requirements for selection have been met.

Each application has its own set of requirements, which may include any one or more of a photograph, passport, travel document (e.g., e-ticket), invitation letter, hotel reservations, government ID, bank statements, or others. Screen 280 will then ask the user to upload necessary documents. In the example seen, the selected visa requires a photo, passport, and e-ticket. The user can select the photo option, and at Screen 290 can upload a picture of him- or herself, either by capturing an image with the mobile device camera or by uploading a photo from a camera library. At screen 300, the business rules engine will validate the photo and confirm whether it meets necessary standards for the countries of interest (e.g., measurements, clarity, or other). Similarly, at screen 280, the user can select to upload copies of a passport and e-ticket, either by taking a live image or selecting a photo from a camera reel. This same process can be implemented for all required documents. All documents uploaded by the user are preferably encrypted and stored in the biometric vault for future use. The documents can also be edited and digitally shredded / deleted by the user in case he/she does not want to pursue the visa application prior making payment. Once the documents are received, the system is configured to validate / authenticate the documents to confirm that they match the user, are accurate, and match the data entered manually. If any inconsistences are found, the system will halt the application process and notify the user for correction.

Screen 310 shows the biometric vault where documents and data are stored. In order to secure the vault for future access, a multi-factor authentication is required using multi modal biometric identification. This may include setting a pin at screen 320, entering a finger print at screen 330, and/or capturing facial recognition at screen 340 (which can be confirmed as sufficient and compliant at screen 350). Although not shown in this example, the multi modal biometric identification may include iris scan, hand geometry, voice recognition, and others. After the biometric data has been entered, the system can create a fusion biometric score at screen 360, which reviews and weighs each piece of identifying data to assess likelihood of mistake in identifying or authenticating the user.

At screen 370, the user will be asked to review and confirm (or update if necessary) all application data. The app preferably provides editable screens so edits or revisions can be made to the entered data until everything is correct. If everything is correct, the applicant can click OK. At screen 380, the user will be prompted to acknowledge the required visa declaration, confirming that the user agrees to all Terms and Conditions, and that all information is accurate and complete.

At screen 390, the user may be offered ancillary services along with the visa application, which may include travel insurance, car rentals, hotel reservations, car service pickup, or other services. If the user wishes to explore any of the options, he can click on the particular link, and the business rules engine is configured to provide real-time information about available options for the selected item.

At screen 400, the user will be prompted to electronically sign the application. This is the near completion of the application process in fulfilling with the requirements stated by the intended country of travel. At screen 410, he or she will be asked to enter the required payment via a credit card, debit card, digital wallet, or other electronic payment means. Commercially available examples of digital wallets include, without limitation, Amazon Payments offered by Amazon of Seattle, Washington; VISA Checkout of Foster City, California; MasterPass offered by MasterCard of Purchase, New York; Apple Pay offered by Apple of Cupertino, California; PayPal offered by PayPal Inc. of San Jose California; Google Wallet offered by Alphabet of Mountain View, California; Samsung Pay of Burlington, Massachusetts. The payment will reflect the cost for the visa application(s), any ancillary services selected, and any local taxes identified by the business rules engine. Once complete, the system will provide a payment confirmation and application receipt at screen 420.

At screen 430, the user can enter the confirmation number provided on the payment receipt to check on the status of the application during processing. Upon selection, the business rules engine will interface in real time with the relevant government authority and provide an update, such as "Payment Successful," "Application Submitted", "Decision Pending," "Visa Approved," or "Visa Denied." This status will be displayed at screen 440.

Once the visa is received from the government authority, it will be sent back to the user's account and stored in the biometric vault. Screens 450, 460, and 470 display the three exemplary tiers of the vault, Level 1, Level 2, and Level 3, respectively (though more or less are envisioned). Should the user wish to access the vault, he can click on the respective tier and enter the same at screen 480. At screens 490-500 the user will be asked to provide multi-factor authentication (e.g., facial recognition at screen 490 and a pattern password at screen 500).

Once the user has been authenticated and granted access, the user can retrieve documents stored in Level 1 of the vault (at screen 450) and will enter Level 1 at screen 510. Documents stored therein may include electronic visas, airline tickets, hotel vouchers, and sightseeing coupons. Upon selection, they will be identified at screen 520, and can be downloaded at screen 530 for future use when needed by the user.

The user can also retrieve documents stored in Level 2 of the vault (at screen 460). Upon this selection, the user will be asked at screen 540 to input a one-time passcode for access, and when provided, the user will enter Level 2 at screen 550. Documents stored at this level may be more personal and identifying, such as a passport, driver's license, or government ID, where security and protection is all the more necessary. The user can select one or more of these documents, which will be identified at screen 560.

The user can also retrieve documents stored in Level 2 of the vault (at screen 470). Upon this selection, the user will receive a halt message at screen 570, indicating that access for review and selection of biometric data stored therein is not available. Instead, the user will be given the option to digitally shred or destroy the data stored therein. Upon selecting to proceed, the user will be given a final chance to reverse course at screen 580, and if the user clicks YES to continue with a digital shred of all data stored in Level 3 of the vault, the shredding will occur and be displayed at screen 590.

As noted previously, the process of steps set forth above is not set in stone and may be varied for different users.

In connection with all of these processes, the system may use voice and voice-to-text technology for form-filling and other functions, which is preferably available in multiple languages. Using technology solutions, the conversion of language to text for form filling and subjective content can be used independently or combined with robotic process automation technology to auto-fill forms, verify accuracy of data from multiple sources, and automate processing such as confirming name accuracy, identifying bank statements, filling out police reports or credit reports, making or checking airline bookings or hotel bookings, or more. This will be beneficial for repeat users to help expedite the application process, whereby all repetitive data can be auto-populated, and the user may skip right from Step 7 visa shopping to step 19 updating the data all while the back end profile score is being generated. This will also increase accuracy of data, given that it would have previously been authenticated and validated by the user.

Preferably, the present invention system also employs unique session identifiers (potentially via an approved random number generator) to communicate between modules or applications within the server and between the application server and the user. The unique session ID allows the app to track communications along with credentials that may have been used to authenticate users or modules. By means of the unique session identifiers, each piece of data pulled from the vault can be parsed and separately encrypted and sent to the necessary recipient (e.g., government entity) to be de-encrypted and re-assembled for review, authentication, and approval/denial. Unique session identifiers help to reduce predictability of said identifiers, address man-in-the-middle attacks, including session hijacking, manipulating valid sessions or any such related fraudulent activity. Other secure forms of communications between the system, the user, and government entities may be employed, including secure sockets layer ("SSL"), which is a standard security technology for establishing an encrypted link between a web server and a browser. An SSL link ensures that all data passed between the web server and the browser remains private and integral.

Preferably, a communications adapter interconnects the system with a network enabling communication and interaction. The communications adapter may be supportive of at least of wired and wireless communication protocols. For example, the communications adapter and network may support protocols such as wired Ethernet, Wi-Fi (e.g., 802.11 protocols), UMTS, dial-up, active-sync, cellular (using protocols such as, for example, GSM, GPRS, EDGE, CDMA, TDMA, 3G, 4G, and the like), Bluetooth, or Near Field Communication. Generally, the communications adapter communicates with network, and may communicate (directly or indirectly) with the Internet.

The system also preferably comprises runtime application self-protection ("RASP"), which is implemented for application security. RASP can resolve issues caused by network outages, web app firewalls, and other security tools, and protects applications from known and unknown attacks by taking action which may include termination sessions, shutting application, sending warning alerts to the user.

It is also envisioned that the system may include use of a virtual assistant to help customize the user account, fill out necessary information, and guide the process. The virtual assistant may be available in multiple languages. The digital assistant will preferably be through integrated technology software and/or using three-dimensional camera.

The system may of the present invention may be provided as a set of machine executable instructions on non-transitory machine readable media. Generally, each user device is configured to store machine executable instructions on non-transitory machine readable media (such as in read-only memory (ROM), random-access-memory (RAM), or in a non-volatile storage unit such as a hard disk, solid state drive, or the equivalent). The machine executable instructions may be referred to as "software," an "application," a "client," a "process," a "plug-in," an "add-in," an "add-on," an "extension," and by other similar terms. The machine executable instructions generally provide for functionality through operation of various methods as may be presented herein as well as others that may be apparent to those skilled in the art.

The device on which the system runs may comprise a clock, central processing unit ("CPU(s)" and/or "processor(s)"), a memory (e.g., a read only memory (ROM) 806, a random access memory (RAM) 805, etc.), and/or an interface bus, and most frequently, although not necessarily, are all interconnected and/or communicating through a system bus on one or more (mother)board(s) 802 having conductive and/or otherwise transportive circuit pathways through which instructions (e.g., binary encoded signals) may travel to effectuate communications, operations, storage, etc. The computer systemization may be connected to a power source; e.g., optionally the power source may be internal. Optionally, a cryptographic processor may be connected to the system bus. In another embodiment, the cryptographic processor, transceivers (e.g., ICs) 874, and/or sensor array (e.g., accelerometer, altimeter, ambient light, barometer, global positioning system (GPS) (thereby allowing SFTSP controller to determine its location), gyroscope, magnetometer, pedometer, proximity, ultra-violet sensor, etc.) may be connected as either internal and/or external peripheral devices via the interface bus I/O and/or directly via the interface bus. In turn, the transceivers may be connected to antenna(s), thereby effectuating wireless transmission and reception of various communication and/or sensor protocols; for example the antenna(s) may connect to various transceiver chipsets (depending on deployment needs), including: Broadcom BCM4329FKUBG transceiver chip (e.g., providing 802.1 In, Bluetooth 2.1+EDR, FM, etc.); a Broadcom BCM4752 GPS receiver with accelerometer, altimeter, GPS, gyroscope, magnetometer; a Broadcom BCM4335 transceiver chip (e.g., providing 2G, 3G, and 4G long-term evolution (LTE) cellular communications; 802.11ac, Bluetooth 4.0 low energy (LE) (e.g., beacon features)); a Broadcom BCM43341 transceiver chip (e.g., providing 2G, 3G and 4G LTE cellular communications; 802.11 g/, Bluetooth 4.0, near field communication (NFC), FM radio); an Infineon Technologies X-Gold 618-PMB9800 transceiver chip (e.g., providing 2G/3G HSDPA/HSUPA communications); a MediaTek MT6620 transceiver chip (e.g., providing 802.11a/ac/b/g/n, Bluetooth 4.0 LE, FM, GPS; a Lapis Semiconductor ML8511 UV sensor; a maxim integrated MAX44000 ambient light and infrared proximity sensor; a Texas Instruments WiLink WL1283 transceiver chip (e.g., providing 802.1In, Bluetooth 3.0, FM, GPS); and/or the like. The system clock typically has a crystal oscillator and generates a base signal through the computer systemization's circuit pathways. The clock is typically coupled to the system bus and various clock multipliers that will increase or decrease the base operating frequency for other components interconnected in the computer systemization. The clock and various components in a computer systemization drive signals embodying information throughout the system. Such transmission and reception of instructions embodying information throughout a computer systemization may be commonly referred to as communications. These communicative instructions may further be transmitted, received, and the cause of return and/or reply communications beyond the instant computer systemization to: communications networks, input devices, other computer systemizations, peripheral devices, and/or the like. It should be understood that in alternative embodiments, any of the above components may be connected directly to one another, connected to the device, and/or organized in numerous variations employed as exemplified by various computer systems.

The device comprises at least one high-speed data processor adequate to execute program components for executing user and/or system-generated requests. Often, the processors themselves will incorporate various specialized processing units, such as, but not limited to: integrated system (bus) controllers, memory management control units, floating point units, and even specialized processing sub-units like graphics processing units, digital signal processing units, and/or the like. Additionally, processors may include internal fast access addressable memory, and be capable of mapping and addressing memory beyond the processor itself; internal memory may include, but is not limited to: fast registers, various levels of cache memory (e.g., level 1, 2, 3, etc.), RAM, etc. The processor may access this memory through the use of a memory address space that is accessible via instruction address, which the processor can construct and decode allowing it to access a circuit path to a specific memory address space having a memory state. The device may comprise a microprocessor such as: AMD's Athlon, Duron and/or Opteron; Apple's A series of processors (e.g., A5, A6, A7, A8, etc.); ARM's application, embedded and secure processors; IBM and/or Motorola's DragonBall and PowerPC; IBM's and Sony's Cell processor; Intel's 80X86 series (e.g., 80386, 80486), Pentium, Celeron, Core (2) Duo, i series (e.g., i3, i5, i7, etc.), Itanium, Xeon, and/or XScale; Motorola's 680X0 series (e.g., 68020, 68030, 68040, etc.); and/or the like processor(s). The CPU interacts with memory through instruction passing through conductive and/or transportive conduits (e.g., (printed) electronic and/or optic circuits) to execute stored instructions (i.e., program code) according to conventional data processing techniques. Such instruction passing facilitates communication within the SFTSP controller and beyond through various interfaces. Should processing requirements dictate a greater amount speed and/or capacity, distributed processors (e.g., see Distributed SFTSP below), mainframe, multi-core, parallel, and/or super-computer architectures may similarly be employed. Alternatively, should deployment requirements dictate greater portability, smaller mobile devices (e.g., Personal Digital Assistants (PDAs)) may be employed.

Depending on the particular implementation, features of the SFTSP may be achieved by implementing a microcontroller such as CAST's R8051XC2 microcontroller; Intel's MCS 51 (i.e., 8051 microcontroller); and/or the like. Also, to implement certain features of the SFTSP, some feature implementations may rely on embedded components, such as: Application-Specific Integrated Circuit ("ASIC"), Digital Signal Processing ("DSP"), Field Programmable Gate Array ("FPGA"), and/or the like embedded technology. For example, any of the SFTSP component collection (distributed or otherwise) and/or features may be implemented via the microprocessor and/or via embedded components; e.g., via ASIC, coprocessor, DSP, FPGA, and/or the like. Alternately, some implementations of the SFTSP may be implemented with embedded components that are configured and used to achieve a variety of features or signal processing. Depending on the particular implementation, the embedded components may include software solutions, hardware solutions, and/or some combination of both hardware/software solutions. For example, SFTSP features discussed herein may be achieved through implementing FPGAs, which are a semiconductor devices containing programmable logic components called "logic blocks", and programmable interconnects, such as the high performance FPGA Virtex series and/or the low cost Spartan series manufactured by Xilinx. Logic blocks and interconnects can be programmed by the customer or designer, after the FPGA is manufactured, to implement any of the SFTSP features. A hierarchy of programmable interconnects allow logic blocks to be interconnected as needed by the SFTSP system designer/administrator, somewhat like a one-chip programmable breadboard. An FPGA's logic blocks can be programmed to perform the operation of basic logic gates such as AND, and XOR, or more complex combinational operators such as decoders or mathematical operations. In most FPGAs, the logic blocks also include memory elements, which may be circuit flip-flops or more complete blocks of memory. In some circumstances, the SFTSP may be developed on regular FPGAs and then migrated into a fixed version that more resembles ASIC implementations. Alternate or coordinating implementations may migrate SFTSP controller features to a final ASIC instead of or in addition to FPGAs. Depending on the implementation all of the aforementioned embedded components and microprocessors may be considered the "CPU" and/or "processor" for the SFTSP.

It is envisioned that data uploaded to the system of the present invention may be stored in any type of database deemed appropriate, and manipulated with appropriate tools. For example, images may be stored in databases such as ORACLE provided by Oracle Corporation, of Redwood Shores, CA; SQL SERVER from Microsoft Corporation of Redmond, WA; and SYBASE of SAP Corporation of Dublin, CA. Data libraries as may be generated may be managed using these or other tools. Some of the machine executable instructions stored on non-transitory machine readable media may include an operating environment also referred to as an operating system. For example, a suitable operating environment may be WINDOWS (available from Microsoft Corporation of Redmond Washington). Other operating environments include iOS from Apple of Cupertino California and ANDROID available from Alphabet of Mountain View California. Software as provided herein may be developed in, for example, SQL language, which is a cross-vendor query language for managing relational databases. Aspects of the software may be implemented with other software. For example, user interfaces may be provided in XML, HTML, a variety of scripting languages and the like.

The business rules engine server component is a stored program component that is executed by a CPU. The server may be a conventional internet information server such as, but not limited to Apache Software Foundation's Apache, Microsoft's Internet Information Server, and/or the like. The information server may allow for the execution of program components through facilities such as Active Server Page (ASP), ActiveX, (ANSI) (Objective-) C (++), C# and/or .NET, Common Gateway Interface (CGI) scripts, dynamic (D) hypertext markup language (HTML), FLASH, Java, JavaScript, Practical Extraction Report Language (PERL), Hypertext Pre-Processor (PHP), pipes, Python, wireless application protocol (WAP), WebObjects, and/or the like. The server may support secure communications protocols such as, but not limited to, File Transfer Protocol (FTP); HyperText Transfer Protocol (HTTP); Secure Hypertext Transfer Protocol (HTTPS), Secure Socket Layer (SSL), messaging protocols (e.g., America Online (AOL) Instant Messenger (AIM), Application Exchange (APEX), ICQ, Internet Relay Chat (IRC), Microsoft Network (MSN) Messenger Service, Presence and Instant Messaging Protocol (PRIM), Internet Engineering Task Force's (IETF's) Session Initiation Protocol (SIP), SIP for Instant Messaging and Presence Leveraging Extensions (SIMPLE), open XML-based Extensible Messaging and Presence Protocol (XMPP) (i.e., Jabber or Open Mobile Alliance's (OMA's) Instant Messaging and Presence Service (IMPS)), Yahoo! Instant Messenger Service, and/or the like. The server can provides results in the form of the app, or in the form of Web pages to Web browsers, and allows for the manipulated generation of the Web pages through interaction with other program components. After a Domain Name System (DNS) resolution portion of an HTTP request is resolved to a particular information server, the information server resolves requests for information at specified locations on the SFTSP controller based on the remainder of the HTTP request. For example, a request such as http://123.124.125.126/myInformation.html might have the IP portion of the request " 123.124.125.126" resolved by a DNS server to an information server at that IP address; that information server might in turn further parse the http request for the "/mylnformation.html" portion of the request and resolve it to a location in memory containing the information "myInformation.html." Additionally, other information serving protocols may be employed across various ports, e.g., FTP communications across port 21, and/or the like. An information server may communicate to and/or with other components in a component collection, including itself, and/or facilities of the like. Most frequently, the information server communicates with the SFTSP database 819, operating systems, other program components, user interfaces, Web browsers, and/or the like.

Access to the SFTSP database may be achieved through a number of database bridge mechanisms such as through scripting languages as enumerated below (e.g., CGI) and through inter-application communication channels as enumerated below (e.g., CORBA, WebObjects, etc.). Any data requests through a Web browser are parsed through the bridge mechanism into appropriate grammars as required by the SFTSP. In one embodiment, the information server would provide a Web form accessible by a Web browser. Entries made into supplied fields in the Web form are tagged as having been entered into the particular fields, and parsed as such. The entered terms are then passed along with the field tags, which act to instruct the parser to generate queries directed to appropriate tables and/or fields. In one embodiment, the parser may generate queries in standard SQL by instantiating a search string with the proper join/select commands based on the tagged text entries, wherein the resulting command is provided over the bridge mechanism to the SFTSP as a query. Upon generating query results from the query, the results are passed over the bridge mechanism, and may be parsed for formatting and generation of a new results Web page by the bridge mechanism. Such a new results Web page is then provided to the information server, which may supply it to the requesting Web browser.

Also, the server may contain, communicate, generate, obtain, and/or provide program component, system, user, and/or data communications, requests, and/or responses.

It will be understood by those of ordinary skill in the art that various changes or modifications may be made and equivalents may be substituted for an element or particular feature without departing from the scope of the invention. Therefore, it is intended that the invention not be limited to the particular embodiments disclosed, but that the invention will include all embodiments falling within the scope of the claims. The above processes in part or entirety are flexible and customizable however the output will be consistent with the disclosure of the present invention.

## Claims

1. A computer-implemented method for transferring user personal information to an institution for application purposes, comprising the steps of:
storing a plurality of personal information templates corresponding to application forms;
permitting access to the system by a user upon authentication of the user;
accepting a user selection of an application form from the institution;
applying a personal information template including data fields corresponding to personal information to be provided in the user selected application form;
retrieving user personal information corresponding to the data fields of the personal information template from a user local data storage;
checking the retrieved user personal information for consistency with the data fields of the personal information template;
populating the application form with the user personal information;
providing the populated application form to the user for approval; and
submitting the populated application form to the institution in response to approval of the populated application form by the user;
wherein the personal information in the user local data storage includes multiple forms of biometric information; and
wherein the user local data storage is controlled by the user.

2. The method according to Claim 1, wherein the application forms are visa application forms.

3. The method according to Claim 1 or 2, wherein the personal information comprises one or more of:
face shape, ear shape, eye movement patterns, iris scans, fingerprints, liveness, skin texture, dermal vasculature, heartbeat video analysis, optic flow, color enhancement, voice, tone, inflection, and speech pattern; and
full legal name, phone number, social security number, passport information, bank statements, and travel confirmations.

4. The method according to any one of the preceding claims, further comprising the steps of:
scoring each item of said personal information for readability;
weighing each said item of personal information against one another; and
authenticating the user based on said weighted score.

5. The method according to any one of the preceding claims, wherein permitting user access to the system comprises multi-factor biometric authentication of the user.

6. The method according to any one of the preceding claims, wherein the local data storage is a smart phone, tablet, iPad, personal digital assistants, laptop computer, or desktop computer.

7. The method according to any one of the preceding claims, wherein accepting a user selection of an application form from the institution comprises communicating, by the system, with the institution and publicly-available databases to obtain real-time information regarding requirements for the application form, in particular requirements that include a list of forms to be completed, a number and size of pictures required, documents which must be submitted in conjunction with the application form, and an application fee.

8. The method according to any one of the preceding claims, wherein prior to submitting the populated application form, the system comprises the steps of:
cross-referencing the user and the personal information against publicly available databases, in particular one or more of social media, watch lists, internet blogs, and criminal records databases; and
weighing each item of cross-referenced personal information against one another; and
assessing a score of the user's application, wherein the score relates to whether or not the application form is approved.

9. A system for transferring user personal information to an institution for application purposes, comprising:
a server-based platform in communication with a user device, the platform configured to:
store a plurality of personal information templates corresponding to application forms, in particular visa application forms;
permit access to the system by a user using the user device upon authentication of the user;
accept a user selection of an application form from the institution;
apply a personal information template including data fields corresponding to personal information to be provided in the user selected application form;
retrieve user personal information corresponding to the data fields of the personal information template from a user local data storage of the user device;
check the retrieved user personal information for consistency with the data fields of the personal information template;
populate the application form with the user personal information;
provide the populated application form to the user at the user device for approval; and
submit the populated application form to the institution in response to approval of the populated application form by the user; and
a user device, controlled by the user, that locally stores the personal information, wherein the personal information includes multiple forms of biometric information.

10. The system according to Claim 9, wherein the personal information comprises one or more of:
face shape, ear shape, eye movement patterns, iris scans, fingerprints, liveness, skin texture, dermal vasculature, heartbeat video analysis, optic flow, color enhancement, voice, tone, inflection, and speech pattern; and
full legal name, phone number, social security number, passport information, bank statements, and travel confirmations.

11. The system according to any one of Claims 9 through 10, further comprising the steps of:
scoring each item of said personal information for readability;
weighing each said item of personal information against one another; and
authenticating the user based on said weighted score.

12. The system according to any one of Claims 9 through 11, wherein permitting user access to the system comprises multi-factor biometric authentication of the user.

13. The system according to any one of Claims 9 through 12, wherein the user device is a smart phone, tablet, iPad, personal digital assistants, laptop computer, or desktop computer.

14. The system according to any one of Claims 9 through 13, wherein to accept a user selection of an application form from the institution comprises, the platform communicates with the institution and publicly-available databases to obtain real-time information regarding requirements for the application form, in particular requirements that include a list of forms to be completed, a number and size of pictures required, documents which must be submitted in conjunction with the application form, and an application fee.

15. The system according to any one of Claims 9 through 14, wherein prior to submitting the populated application form, the platform is configured to:
cross-reference the user and the personal information against publicly available databases, in particular one or more of social media, watch lists, internet blogs, and criminal records databases; and
weigh each item of cross-referenced personal information against one another; and
assess a score of the user's application, wherein the score relates to whether or not the application form is approved.
